# EUROPÄISCHE PATENTSCHRIFT

(11) **EP 0 901 645 B1**
(45) Veröffentlichungstag und Bekanntmachung des Hinweises auf die Patenterteilung: **16.08.2001**
(21) Anmeldenummer: 97924908.3
(22) Anmeldetag: 16.05.1997
(51) Int. Cl.: G02B 6/42, H01L 31/00, H01L 33/00, H01S 3/00

(54) **ELEKTROOPTISCHES MODUL**
ELECTRO-OPTICAL MODULE
MODULE ELECTRO-OPTIQUE

(30) Priorität: 24.05.1996 DE 19622459
(43) Veröffentlichungstag der Anmeldung: 17.03.1999
(73) Patentinhaber: Infineon Technologies AG, 81669 München (DE)
(72) Erfinder: MEYER-GÜLDNER, Frank, D-12357 Berlin (DE); KROPP, Jörg-Reinhardt, D-12355 Berlin (DE); GRUMM, Mathias, D-10318 Berlin (DE); JEITER, Georg, D-12347 Berlin (DE)
(74) Vertreter: Zedlitz, Peter, Dipl.-Inf.
(86) Internationale Anmeldenummer: DE9701041
(87) Internationale Veröffentlichungsnummer: WO9745759

(56) Entgegenhaltungen:
- EP-A- 0 413 489
- WO-A-94/11929
- US-A- 4 979 787
- US-A- 5 259 053

## Beschreibung

Die Erfindung liegt auf dem Gebiet elektrooptischer Aufbauten für optische Systeme und betrifft ein elektrooptisches Modul mit einem elektrooptischen Bauelement und mit einer Aufnahme für einen Lichtwellenleiterstecker, die auf einer einzigen Oberfläche eines Substrats angeordnet sind, und mit einer im optischen Weg zwischen dem Bauelement und der Aufnahme angeordneten Linse.

Derartige Module dienen zur Signalübertragung mittels optischer Wellenleiter und enthalten zumindest ein Bauelement, das einen elektrooptischen Wandler umfaßt. Ein elektrooptischer Wandler dient zur Wandlung optischer in elektrische Signale bzw. umgekehrt zur Wandlung elektrischer in optische Signale.

Ein Modul der eingangs genannten Art ist aus der EP 0 600 645 A1 bekannt und umfaßt zwei elektrooptische Bauelemente (Laserdiode und Fotodiode), die auf präzise auf einem Siliziumsubstrat plazierten Metallflächen ("Pads") mit wiedererwärmbarem Lot positioniert werden. Beim nachfolgenden Wiedererwärmen des Lotes (Reflow) werden die Bauelemente aufgrund der Oberflächenspannung des verflüssigten Lotes gegenüber den Metallflächen zentriert.

In der Umgebung der Metallflächen und damit der elektrooptischen Bauelemente ist in dem Siliziummaterial durch Ätzen eine Vielzahl von Ausrichtvertiefungen erzeugt. In diese Vertiefungen sind Ausrichtelemente - beispielsweise Ausrichtkugeln - einbringbar, die mit korrespondierenden Ausrichtvertiefungen eines separaten, über dem jeweiligen elektrooptischen Bauelement präzise auszurichtenen Trägers kooperieren.

Der Träger kann eine im Strahlengang zwischen dem Bauelement und einer Aufnahme für einen Lichtwellenleiterstecker vorgesehene Linse tragen oder die Aufnahme unmittelbar in bezug auf das Bauelement ausrichten.

Bei äußerst präziser Herstellung der Einzelteile, insbesondere des Trägers, der beiderteiligen Ausrichtvertiefungen und ggf. der Linse bzw. der Aufnahme für den Lichtwellenleiterstecker, ermöglicht das bekannte Modul, auf eine aktive Justage der Aufnahme gegenüber dem elektrooptischen Bauelement zu verzichten. Die Höhe des Trägers und ggf. der Linsendurchmesser sind jedoch konstruktive Größen, die auf die relative Position der Aufnahme bzw. des Lichtwellenleitersteckers gegenüber dem elektrooptischen Bauelement in Z-Richtung - also in Richtung des Lichtwellenleiters oder Strahlengangs - erheblichen Einfluß haben. Die in der EP 0 600 645 A1 angesprochene unmittelbare Befestigung der Aufnahme auf der Substratoberfläche kann dann zu Bauteilverspannungen führen, wenn durch die Geometrien des Trägers und ggf. der Linse die tatsächliche Positionierung der Aufnahme in Z-Richtung keine unmittelbare spannungsfreie Verbindung mit dem Substrat zuläßt.

Der Erfindung liegt die Aufgabe zugrunde, ein elektrooptisches Modul zu schaffen, das mit möglichst wenigen Einzelteilen hochpräzise, reproduzierbare Kopplungsgeometrien in Z-Richtung aufweist.

Diese Aufgabe wird erfindungsgemäß bei einem elektrooptischen Modul der eingangs genannten Art dadurch gelöst, die Oberfläche frei von Ausrichtstrukturen ist und daß das elektrooptische Bauelement und die Linse unmittelbar aufeinander ausgerichtet sind und eine integrierte, auf der Oberfläche montierbare Baueinheit bilden.

In fertigungstechnischer Hinsicht besteht ein wesentlicher Vorteil der Erfindung darin, daß die Oberfläche des Substrats - von Leiterbahnen und Metallisierungen abgesehen - unstrukturiert und vertiefungsfrei bleiben kann. In der Materialauswahl für das Substrat ist man daher nicht auf spezielle Strukturierungseigenschaften - wie beispielsweise bei dem gemäß der EP 0 600 645 A1 zu verwendenden Silizium-Substrat - angewiesen. Vielmehr kann das Substrat (z. B. Leiterplatte) nach handhabungstechnischen, fertigungstechnischen und insbesondere unter Kostenaspekten optimiert ausgewählt werden. Ein weiterer wesentlicher Vorteil der Erfindung besteht darin, daß die von dem elektrooptischen Bauelement und der Linse gebildete oberflächenmontierbare Baueinheit vorab hochpräzise hergestellt und geprüft werden kann. Eine nachträgliche toleranzbehaftete Montage eines Linsenträgers über einem vorab auf dem Substrat zu montierenden elektrooptischen Bauelement ist bei dem erfindungsgemäßen Modul nicht erforderlich. Dadurch werden sowohl die Fertigungstechnik vereinfacht als auch eine zusätzliche Toleranzgröße ausgeschaltet. Die Baueinheit kann vorzugsweise metallische Oberflächen zur unmittelbaren elektrischen Kontaktierung mit dem Substrat aufweisen. Die reproduzierbare Genauigkeit in Z-Richtung ist nur noch durch die Baueinheit bestimmt, während vorteilhafterweise die Substratdicke diesbezüglich nicht relevant ist.

Eine bevorzugte Ausgestaltung des erfindungsgemäßen Moduls besteht darin, daß die Aufnahme berührungsfrei zu der Baueinheit angeordnet ist und nur mit der Oberfläche des Substrats in Kontakt und verbunden ist. Diese Konstruktion ermöglicht eine vollständig spannungsfreie und bei Temperaturveränderungen kaum belastete Ausgestaltung.

Es kann vorteilhaft vorgesehen sein, daß das Substrat auf seiner der Aufnahme abgewandten Seite eine elektronische Schaltung trägt.

Dadurch kann eine elektronische Ansteuerschaltung (im Sendefall) oder eine Empfangs- oder Verstärkerschaltung sehr nahe an dem Bauelement angeordnet werden. Die Signalwege werden hierdurch verkürzt und die Störanfälligkeit wird verringert.

Um insbesondere die Hochfrequenzeigenschaften und die Unempfindlichkeit gegenüber äußeren Störungen weiter zu verbessern, sieht eine bevorzugte Fortbildung des erfindungsgemäßen Moduls vor, daß die integrierte Baueinheit durch eine unmittelbar auf die Oberfläche des Substrats aufgebrachte Kappe elektrisch abgeschirmt ist.

Eine weitere vorteilhafte Ausgestaltung sieht vor, daß das Substrat ein Teil eines Starr-flex-starr-Schaltungsträgers ist.

Hierdurch wird die Aufbautechnik vereinfacht. Mechanische und elektrische Verbindungen werden in dem Flex-teil des Starr-flex-starr-Schaltungsträgers konstruktiv vereinigt.

Die Erfindung wird nachfolgend beispielhaft anhand einer Zeichnung weiter erläutert; es zeigen:
Figur 1 einen Längsschnitt durch ein erfindungsgemäßes Modul und
Figur 2 eine Baueinheit in Schnitt und Aufsicht
Figur 3 das Substrat asl Teil eines Starr-flex-starr-Schaltungsträgers.

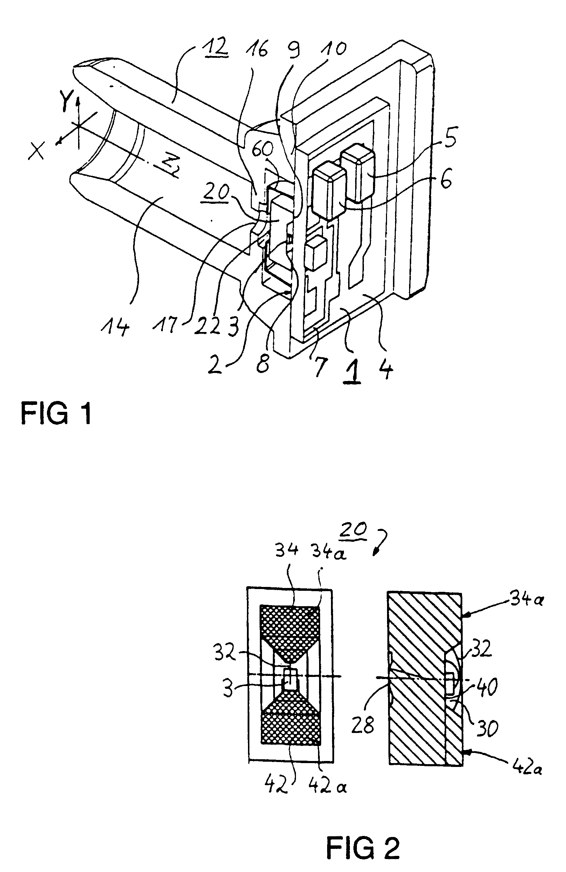

Gemäß Figur 1 enthält das elektrooptische Modul ein Substrat in Form einer Leiterplatte 1, auf dessen vorderer Flachseite (erste Oberfläche) 2 u. a. ein elektrooptisches Bauelement 3 angeordnet ist. Auf der rückwärtigen Obefläche 4 des Substrats 1 sind andeutungsweise einzelne elektronische Komponenten 5, 6 dargestellt, die über Leiterbahnen 7 miteinander verschaltet und durch nicht näher dargestellte elektrische Durchführungen durch das Substrat 1 mit Anschlußkontaktflächen 8, 9 auf der ersten Oberfläche 2 verbunden sind. Die Anschlußkontaktflächen dienen zur Kontaktierung des elektrooptischen Bauelementes 3. Auf derselben Oberfläche 2 stützt sich ein Flansch 10 einer Aufnahme 12 ab, die eine zentrische Bohrung 14 zur an sich bekannten Aufnahme eines nicht näher dargestellten Lichtwellenleitersteckers enthält. Beim Einführen kommt die Stirnfläche des Steckers an einer Zwischenwand 16 mit einer zentralen Bohrung 17 zur Anlage, die einen Lichtweg zwischen dem elektrooptischen Bauelement 3 und einem zentrisch in dem Lichtwellenleiterstecker aufgenommenen Lichtwellenleiterende ermöglicht. Wie nachfolgend noch näher erläutert, bildet das Bauelement 3 einen integralen Bestandteil einer auf der Oberfläche 2 des Substrats 1 montierten Baueinheit 20.

Die substratferne Oberseite 22 der Baueinheit 20 ist als Linse ausgeformt (vgl. Figur 2), die damit im optischen Weg zwischen dem Bauelement und der Aufnahme 12 liegt. Die Oberfläche 2 weist die genannten Kontaktflächen 8, 9 auf und ist ansonsten mechanisch nicht strukturiert; sie enthält insbesondere keine Ausrichtvertiefungen für die Baueinheit 20.

Wie Figur 2 in Aufsicht- und Schnittdarstellung zeigt, ist die Baueinheit 20 eine integrale Einheit von an der Oberseite 22 ausgebildeter Linse 28 und elektrooptischem Bauelement 3. Das Bauelement 3 ist zum Schutz vor äußeren Einflüssen hermetisch dicht in einer Füllmasse 30 eingebettet, die auch den zur Kontaktierung des Bauelements 3 auf dessen Oberseite angebrachten Bonddraht 32 umfaßt. Wie der linke Teil der Figur 2 zeigt, führt der Bonddraht 32 zu einer Anschlußmetallisierung 34, die sich über eine Schräge und den Bodenbereich einer das Bauelement 3 aufnehmenden Vertiefung 40 erstreckt. Die Unterseite des Bauelements 3 ist mit einer zweiten Metallisierung 42 elektrisch leitend verbunden. Bei der Montage der Baueinheit 20 auf der Oberfläche 2 werden die außenseitigen Metallisierungsbereiche 34a, 42a mit den korrespondierenden Anschlußflächen auf dem Substrat in bei der Oberflächenmontage bekannter Weise kontaktiert.

Aus Figur 1 ist weiterhin erkennbar, daß die Aufnahme 12 berührungsfrei zu der Baueinheit 20 angeordnet ist und nur mit der Oberfläche 2 des Substrats 1 in Kontakt und verbunden ist. Dadurch läßt sich ein besonders spannungsarmer und Temperaturwechseln gegenüber unempfindlicher Aufbau des Moduls erreichen. Ferner ist eine unmittelbar auf die Oberfläche 2 aufgebrachte elektrisch leitende Kappe 60 erkennbar, durch die die Baueinheit 20 aufnahmeseitig elektrisch abgeschirmt ist.

Bei dem vorbeschriebenen Modul ist zwar ggf. eine Justage der Aufnahme 12 in bezug auf das Bauelement 3 in X-Y-Richtung - d. h. in der zur Z-Richtung senkrechten Ebene - erforderlich, die aber aufgrund der glatten und eben ausgebildeten Leiterplattenoberfläche 2 problemlos möglich ist. Das Modul bietet den wesentlichen Vorteil, daß nur vergleichsweise wenige Toleranzen die Genauigkeit in Z-Richtung beeinflussen, so daß diesbezüglich nach der Montage keine justierenden oder korrigierenden Maßnahmen mehr notwendig sind. Ein weiterer Vorteil des Moduls besteht darin, daß die Baueinheit 20 und die Aufnahme 12 auf derselben Bezugsfläche - nämlich der Oberfläche 2 - in Z-Richtung ausgerichtet sind. Die Genauigkeit in Z-Richtung wird damit im wesentlichen nur noch durch ein einziges Teil, nämlich die Baueinheit 20, bestimmt, während die Substratdicke nicht eingeht. Vorteilhafterweise kann auf der rückwärtigen Seite des Substrats die Auswertungs- oder Ansteuerungselektronik für das Bauelement 3 angeordnet werden. Durch kurze Leiterbahnen 7 und unmittelbare Durchkontaktierungen zur Baueinheit 20 sind günstige Hochfrequenzeigenschaften und eine hohe Unempfindlichkeit gegenüber äußeren Störungen gewährleistet. Die Umempfindlichkeit wird durch die entsprechend kontaktierte Kappe 6 noch erhöht.

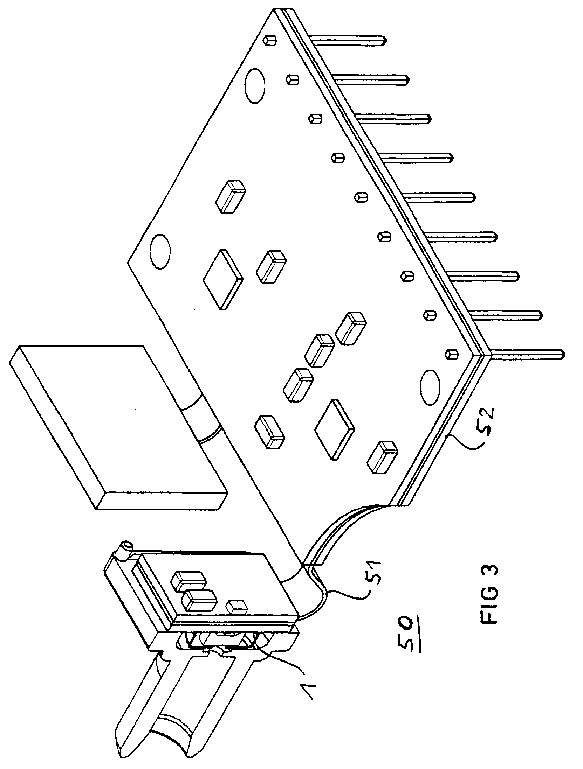

In Figur 3 ist in perspektivischer Ansicht ein Starr-flexstarr-Schaltungsträger 50 gezeigt, der aus einem starren Teil 1, gebildet durch das Substrat, einem flexiblen Teil 51 mit flexiblen Leitern und einem weiteren starren Teil 52 besteht. Der Schaltungsträger 50 kann bei der Montage als Einheit montiert werden, wodurch Befestigungsschritte eingespart werden.

## Patentansprüche

1. Elektrooptisches Modul
- mit einem elektrooptischen Bauelement (3) und mit einer Aufnahme (12) für einen Lichtwellenleiterstecker, die auf derselben Montage-Oberfläche (2) eines Substrats (1) angeordnet sind, und
- mit einer im Strahlengang zwischen dem Bauelement (3) und der Aufnahme (12) angeordneten Linse (28),
- wobei die Montage-Oberfläche (2) senkrecht zum Strahlengang orientiert ist,
**dadurch gekennzeichnet, daß**
- die Montage-Oberfläche (2) frei von Ausrichtstrukturen ist und daß
- das elektrooptische Bauelement (3) und die Linse (28) unmittelbar aufeinander ausgerichtet sind und eine integrierte, auf der Montage-Oberfläche (2) montierte Baueinheit (20) bilden.

2. Elektrooptisches Modul nach Anspruch 1,
**dadurch gekennzeichnet, daß**
die Aufnahme (12) berührungsfrei zu der Baueinheit (20) angeordnet ist und nur mit der Oberfläche (2) des Substrats (1) in Kontakt und verbunden ist.

3. Elektrooptisches Modul nach Anspruch 1 oder 2,
**dadurch gekennzeichnet, daß**
das Substrat (1) auf seiner der Aufnahme (12) abgewandten Seite eine elektronische Schaltung trägt.

4. Elektrooptisches Modul nach Anspruch 1 oder 2,
**dadurch gekennzeichnet, daß**
die Baueinheit (20) durch eine unmittelbar auf die Oberfläche (2) des Substrats (1) aufgebrachte Kappe (60) elektrisch abgeschirmt ist.

5. Elektrooptisches Modul nach Anspruch 1 oder einem der folgenden,
**dadurch gekennzeichnet, daß**
das Substrat (1) ein Teil eines Starr-flex-starr-Schaltungsträgers (50) ist.

## Claims

1. Electro-optical module
- having an electro-optical component (3) and having a receptacle (12) for an optical fiber plug, which are arranged on the same assembling surface (2) of a substrate (1), and
- having a lens (28) arranged in the beam path between the component (3) and the receptacle (12),
- the assembling surface (2) being orientated perpendicular to the beam path,
characterized in that
- the assembling surface (2) is free from aligning structures, and in that
- the electro-optical component (3) and the lens (28) are aligned directly with one another and form an integrated device (20) assembled on the assembling surface (2).

2. Electro-optical module according to Claim 1,
characterized in that the receptacle (12) is arranged so as not to touch the device (20) and makes contact with and is connected to only the surface (2) of the substrate (1).

3. Electro-optical module according to Claim 1 or 2, characterized in that the substrate (1) carries an electronic circuit on its side averted from the receptacle (12).

4. Electro-optical module according to Claim 1 or 2, characterized in that the device (20) is electrically shielded by a cap (60) attached directly to the surface (2) of the substrate (1).

5. Electro-optical module according to Claim 1 or one of the following claims,
characterized in that the substrate (1) is part of a rigid-flexible-rigid circuit carrier (50).

## Revendications

1. Module électro-optique
- comprenant un élément électro-optique (3) et un logement (12) pour un connecteur de guide d'ondes lumineuses, qui sont situés sur la même surface de montage (2) d'un substrat (1), et
- comprenant une lentille (28) située sur la trajectoire des rayons entre l'élément (3) et le logement (12),
- la surface de montage (2) étant orientée de manière perpendiculaire par rapport à la trajectoire des rayons,
caractérisé en ce que
- la surface de montage (2) est dépourvue de structures d'alignement et en ce que
- l'élément électro-optique (3) et la lentille (28) sont alignés directement l'un sur l'autre et forment une unité modulaire (20) intégrée montée sur la surface de montage (2).

2. Module électro-optique selon la revendication 1,
caractérisé en ce que le logement (12) est disposé de manière à ne pas avoir de contact avec l'unité modulaire (20) et il est en contact et relié seulement avec la surface (2) du substrat (1).

3. Module électro-optique selon l'une des revendications 1 ou 2,
caractérisé en ce que le substrat (1) porte un circuit électronique sur son côté éloigné du logement (12).

4. Module électro-optique selon l'une des revendications 1 ou 2,
caractérisé en ce que l'unité modulaire (20) est protégée électriquement par un capot (60) posé directement sur la surface (2) du substrat (1).

5. Module électro-optique selon la revendication 1 ou l'une des revendications suivantes, caractérisé en ce que le substrat (1) est une partie d'un support (50) de circuit "rigide-souple-rigide".
